# EUROPEAN PATENT APPLICATION

(11) **EP 1 298 854 A1**
(43) Date of publication of application: **02.04.2003**
(21) Application number: 01410124.0
(22) Date of filing: 01.10.2001
(51) Int. Cl.: H04L 12/56

(54) **Distribution of data in a peer-to-peer network**

(71) Applicant: Hewlett-Packard Company, Palo Alto, CA 94304 (US)
(72) Inventor: Bruno, Richard, 38920 Crolles (FR)
(74) Representative: Lloyd, Richard Graham

(57) **Abstract**

The present invention relates to the field of networks and, more particularly, to peer to peer networks. Accordingly, the present invention allows data to be distributed amongst devices in a network, without requiring a central server or controller to control and manage the distribution.

## Description

### Field of the Invention

The present invention relates to the field of networks and, more particularly, to peer to peer networks.

### Background of the Invention

Networks of devices are well known in the field of information technology. Typically, such networks allow different devices in the network to communicate with one another and are generally controlled by a central server that is responsible for managing the communication between the different devices in the network.

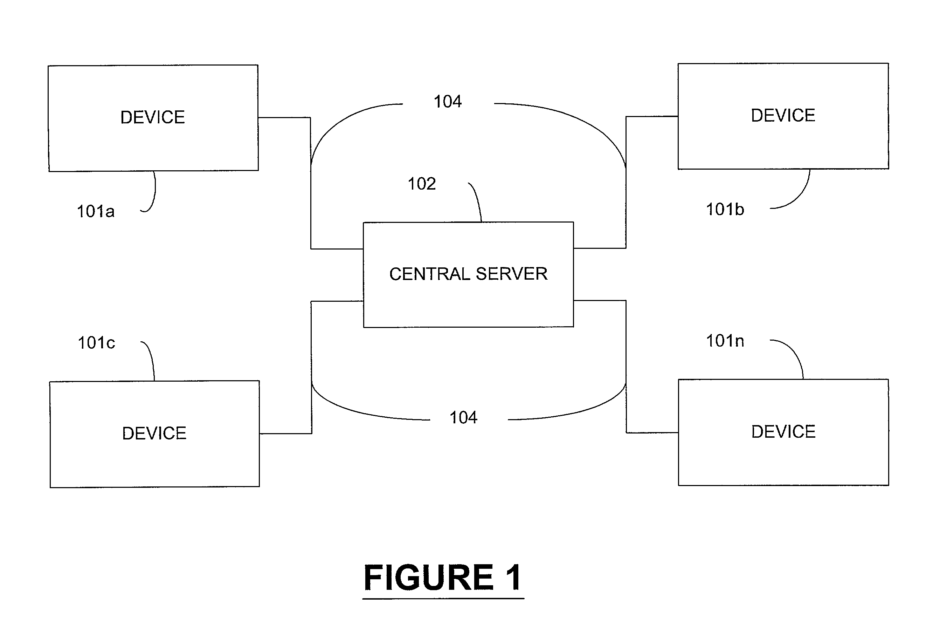

Figure 1 is a block diagram of such a central server based system according to the prior art. A number of devices 101a to 101n are connected via a network 104 to a central server 102. If the device 101a wishes to distribute data to other devices in the network, e.g. devices 101b to 101n, the device 101a sends the data to the central server 102. The central server 102 knows which devices are connected to it, and therefore is able to distribute the data as appropriate to the devices 101b to 101n. If devices are added or removed from the network the central server 102 must be updated accordingly. In a system of this type, a central server is required to oversee the central administration of the network.

One network configuration that does not rely on a central server is the so-called Freenet, details of which can be found at http://freenet.sourceforge.net/

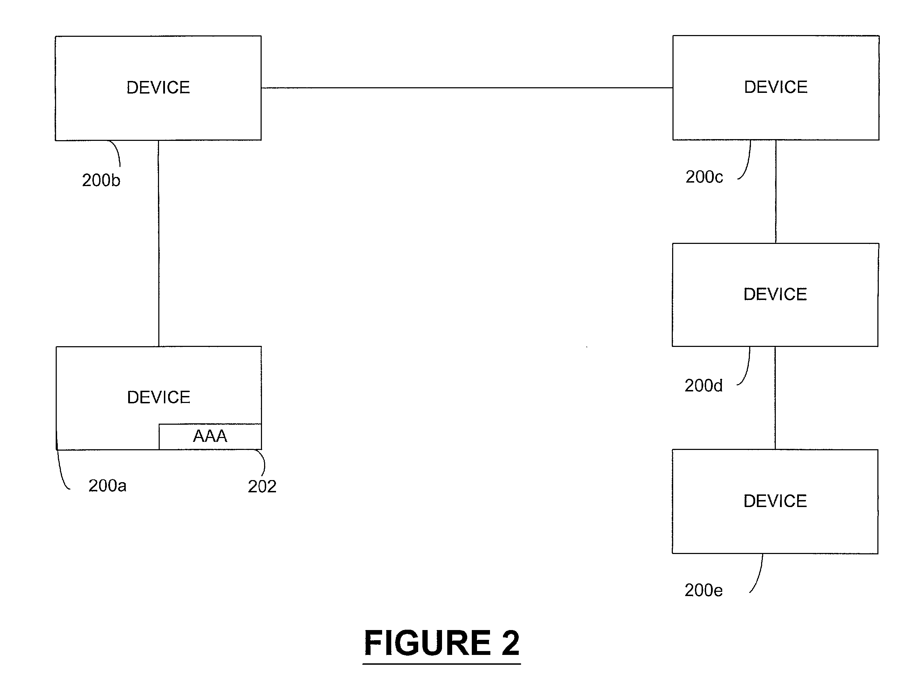

Figure 2 is a block diagram showing an example of a network according to the Freenet network. A number of devices 200a to 200e are shown. The device 200a stores a file 202 in a database or other storage means associated with the device. The file 202 is signed with a signing function, for example, a hashing function, to generate a unique signature for the file. In Figure 2 the unique signature is shown as being AAA.

If a user of the device 200e wishes to retrieve the file 202 from the network it must first of all know the signature of the file to be retrieved. If the requested file does not reside already in the device 200e the device 200e sends a request for the file to other devices to which it is connected; in this case the device 200d. The device 200d checks to see whether it has a file with the matching signature stored in the device. If the device 200d does have the requested file 202, it supplies the requested file to the device 200e. If the device 200d does not have the requested file, it too requests the file from other devices to which it is connected.

Eventually, the device 200b requests the file 202 from the device 200a, which supplies the file to the device 200b. The device 200b stores the file and transmits it back to the device that made the direct request, i.e. the device 200c. This process continues until requested file is delivered to the device 200e that made the initial request. Typically, if a file stored on the network is not accessed over a long period of time, the file gets overwritten and therefore removed from the network. Where a particular file is accessed frequently, the file will migrate around the network and will eventually be stored on devices close to where the requests for that file are made from.

One of the major problems with the Freenet configuration is that retrieve times can be slow, since file requests are dealt with on an as and when basis. In other words, if a device requests a file that is not stored locally, a search spreads out across the whole network trying to locate the file. This is not only laborious, but can also use large amounts of network bandwidth. Additionally, in order to retrieve a file the signature of the file must be known.

### Summary of the Invention

One aim of the present invention is to provide an improved network and devices for use thereon which overcome the above-mentioned problems of the prior art.

Accordingly, the present invention allows data to be distributed amongst devices in a network, without requiring a central server or controller to control and manage the distribution. This is particularly advantageous in large networks with many hundreds or thousands of devices, where having a central server is generally neither feasible nor desired.

According to a first aspect of the present invention, there is provided a method of distributing data in a network of devices, wherein each device comprises a database and is capable of communicating with at least one other device in the network, the method comprising: maintaining in the database a list of devices in the network; selecting a device from the list devices; selecting a portion of the database; distributing the selected portion of the database to the selected device; receiving data from at least one other device in the network; and updating the database in accordance with the received data.

According to a second aspect of the present invention, there is provided a device for distributing data in a network of devices, wherein each device comprises a database and is capable of communicating with at least one other device in the network comprising: means for determining a list of devices in the network; means for selecting a device from the list; means for selecting a portion of the database; means for distributing the selected portion of the database to the selected device; means for receiving data from at least one other device in the network; and means for updating the database in accordance with the received data.

### Brief Description of the Invention

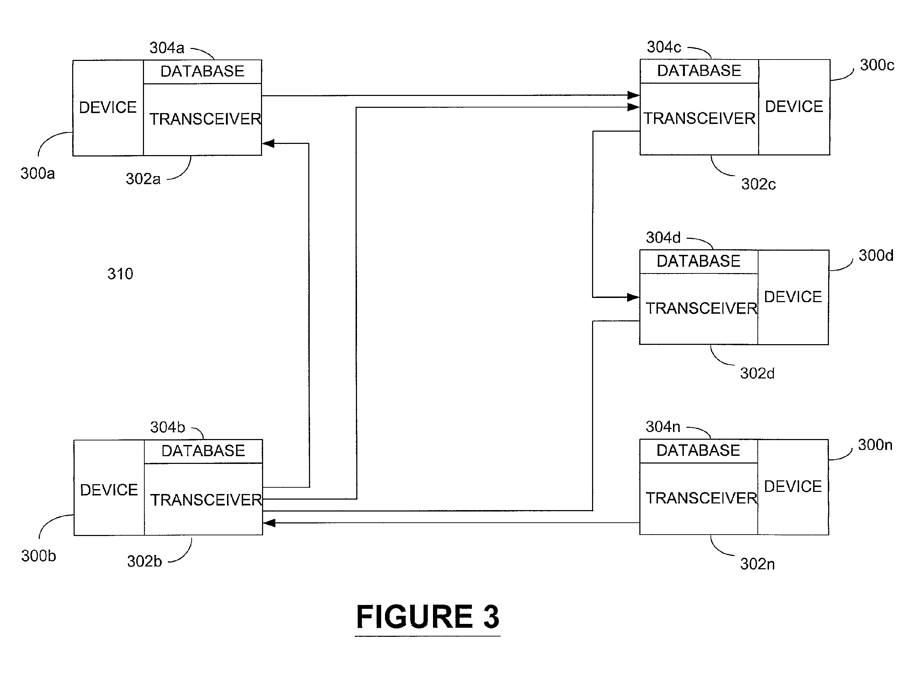

An example embodying the invention will now be described, by way of non-limiting example, with reference to the accompanying drawings, in which:
. **Figure 1** is a block diagram of such a central server based system according to the prior art. ;
. **Figure 2** is a block diagram showing an example of a network according to the Freenet network; and
. **Figure 3** shows a block diagram of a system according to an embodiment the present invention.

### Best Mode of Carrying out the Invention

Figure 3 shows a block diagram of a system according to an embodiment of the present invention. A network 310 of devices 300a to 300n is illustrated. Each of the devices 300a to 300n includes a transceiver (302a to 302n respectively) enabling them to communicate with other devices in the network and a database (304a to 304n respectively). A transceiver is herein defined as a means for receiving and transmitting signals and data for the purposes of communication. A transceiver may be, for example, a network adapter, a modem or other suitable means. A transceiver may be either a combined receiver/transmitter, or may comprise separate reception and transmission means.

The network may be an Internet protocol (IP) or other appropriate network. Each of the devices 300a to 300n may be any kind of appropriate device, for example, personal computers, servers, mobile devices including portable radiotelephones and so-called personal digital assistants (PDA), laptop computers etc. For the sake of simplicity of explanation, however, the description herein will initially only consider a network of personal computers. Those skilled in the art will appreciate that the other types of appropriate devices mentioned above may be substituted in place of a personal computer without detracting from the inventive concepts described herein.

In a first embodiment each of the devices 300a to 300n maintain, in their respective databases, details of other devices in the network. The contents of each database are arranged into what are herein referred to as database objects.

The way in which the contents of each database are acquired and maintained is described below.

The database 304a of device 300a contains a list of database objects each of which contain details of a different device in the network 310 with which it may communicate. The device 300a selects at least one database object relating to at least one of the other devices in the network 310 and transmits a portion of its database 304a to the selected device or devices. The transmitted portion of the database contains at least the address or network name of the device 300a. It should be noted that the transmissions are unsolicited, i.e. they are not requested by the receiving device.

The device 300a may select a database object in the database 304a using a variety of different methods, such as random selection, pseudo-random selection, sequential or other algorithm-based selection.

Preferably a time stamp is included with each database object to indicate the time at which the database object was sent. Additionally, a unique identifier is preferably included with the transmitted database object. The unique identifier may be generated by any number of known methods, for example using a combination of the media access controller (MAC) address, the number of seconds since 1 January 1970, and a randomly generate number.

In the example shown in Figure 3, device 300a chooses to transmit a portion of its database 304a to the device 300c. The portion of the database chosen for transmission may, for example, be the whole contents of the database, i.e. all the database objects in the database. Alternatively the chosen portion may contain only to some of the database objects, and hence relate to only a specific device or devices.

On receiving a database object, the device 300c checks its database 304c to determine whether the database object exists already. This may be achieved by checking the unique identifier of the received database object. If the database 304c of device 300c does not contain the received database object, the received database object is stored therein. If the database 304c does contain the received database object the timestamp of the database object is checked against the timestamp of the database object stored in the database 304c. From the timestamps it is determined whether the received database object is more recent than that already stored. The received database object is stored in the database only where the received database object is more recent than that already stored. In a preferred embodiment, where a database object received by a device is older than that stored on its own database, the receiving device transmits its copy of the database object back to the sending device, thereby enabling its database to be updated.

Each device in the network performs the same tasks described above. Over time, each device builds up and maintains a database of database objects, and therefore contains details of other devices in the network.

Each device may be preprogrammed to determine both the frequency at which it sends database objects to other devices in the network and the number of devices to which database objects are sent. If the frequency of sending database objects is low, the time taken for every device in the network to know about other devices in the network will be long, resulting in inaccurate or out-of-date data in the databases of some devices. At the same time, however, the associated network traffic will be minimal.

If the frequency of sending database objects is high, the data in the databases of the devices in the network will be more accurate, and will adjust more quickly to changes in individual devices. Consequently, the associated network traffic will be high.

It can be estimated that the convergence of the network is of the order of P.log(N), where P = transmission interval and N = number of peers. For example, in a network with 1000 devices each having a transmission interval of 5 seconds, the overall convergence is of the order of 5xlog(1000) = 50. This means that half convergence is reached after only 50 seconds.

If a device is removed from the network it will no longer be available should another device attempt to transmit a database object to it. In this case, the database object relating to the unavailable device may either be removed from the database, or, preferably, may be updated to show that the device is unavailable.

When a new device is connected to the network, the new device can acquire details of other devices in the network in a number of ways. For example, the new device may send a broadcast message requesting that other devices send their address details. One alternative is to enter into the database of the new device the address of a known device in the network. Once the new device has at least one address in its database, the new device will quickly acquire details of other devices in the network.

The frequency of transmitting database objects is preferably adapted according to device type. For example, a PDA or mobile device may only be connected to the network for short periods of time. It may therefore preferable that the information in the network is updated frequently. On the other hand, a server, which is permanently connected to the network, may need to transmit database objects from its database less often.

In a preferred embodiment the frequency at which database objects are transmitted from one device to another varies according to device type. For example, for devices which do not change their status often, such as business PC's, a low frequency, e.g. 1-10 minutes, is sufficient. For mobile devices, on the other hand, a higher frequency, e.g. approximately every 1-10 seconds, may be desirable. This helps to ensure fast convergence of the information in the network. The frequency need not be constant for a particular device and may vary over time. For example, it may be preferable to increase the frequency of transmission when a device is initially connected to the network, or if data on the device is changing rapidly.

Each device on the network is responsible for the management of its own database and may implement any number of ways for managing its database contents. For example, if required database objects may be overwritten according to a least recently used (LRU), least frequently used (LFU) or other appropriate algorithm.

The above-described example embodiment illustrates how a network according to this embodiment adapts and converges so that, within a short time, most or all of the devices in the network have details of most or all of the other devices in the network.

In a further embodiment, the database objects transmitted between devices may, in addition to including device address information, additionally include information relating to the device type and the availability of resources of the device. The information relating to the device type may indicate, for example, whether a device is a personal computer, a server, a PDA, a mobile device etc. The information relating to the availability of resources may indicate, for example, the processor type of a device, the amount of memory or disk storage available, whether a device is currently connected to the network etc.

It is preferred that each database stores database objects relating to both 'relevant' and 'non-relevant' devices in the network. Relevant devices may be defined according to the following criteria: proximity of the device in the network e.g. network latency required to reach the device; computing capability of the device; probabilistic availability. Other criteria may also be used. A relevant device may, for example, be a device which is on the same network subnet, has available computing capability (e.g. not a PDA or mobile telephone) and is often in an idle state. It is preferable for each device to store information about local devices, which are generally more useful to the device, than to store details about distant devices. The purpose of storing details of some non-relevant devices is to improve the convergence of data in the network. Each device may apply the criteria differently or even have different criteria for determining 'relevant' and 'non-relevant' devices.

In a preferred embodiment, around 0 to 10% of the database of a device is used to store database objects of non-relevant devices. In a private or closed network there may be no devices designated as non-relevant.

This embodiment is particularly useful in the field of distributed computing and cluster networks as well as in other fields which allow the resources of other network devices to be known and used remotely. For example, if the device 300a wishes to carry out a computing task, such as the rendering of a large graphics file the device 300a may use the information in its database to determine which devices in the network may be used to perform this task.

In yet a further embodiment additional database objects are stored in each device database. These additional database objects are transmitted between devices in the manner described above. These additional database objects may be, for example, file or other data packages. For example, the device 300a may decide to publish a database object (contained in the database 304a) to the network. In this context publish means the initial making available to the network of a database object.

Referring again to Figure 3, the device 300a decides to publish a database object to the network. One way in which this may be achieved is to store the required database object in the database 304a. By doing so the database object is capable of being selected and transmitted to other devices in the network using the above-described mechanism. The selection and transmission of database objects is preferably carried out in accordance with the above-description and in addition to the selection and transmission of database objects relating to network devices described above.

In this way, a database object made available in a device database will, after convergence, be stored in most of the other device databases in the network 310. Thereafter, should another device in the network require the same database object it should be located locally in its database. This enables a device to be able to access a database object locally, without requiring further network access.

One particularly useful feature is the ease with which a database object can be updated across the whole network. For example, if the device 300a modifies a database object, the modified database object will quickly be updated on other devices in the network, using the distribution mechanisms described above, without requiring any specific action from a device or user.

In a still further embodiment, a mechanism to effectively force the update of a device database may be employed. This is particularly useful in the case of mobile devices, or other devices which are not constantly connected to the network. A mobile device may only be connected to the network for short periods of time, for example, whilst downloading email or phonebook information. It is possible that the mobile device may be disconnected from the network before it has a chance to receive updated database objects from other devices on the network. One way in which such a device can force an update of its database is to choose a device upon connection to the network and to send the contents of its database to the known device. As described above, if the chosen device receives a database object which is the same but older than the one in its database, it will respond by sending back its copy of the database object. This will in turn cause an update, where required, of the database objects in the database of the mobile device. Preferably the device chosen upon connection to the network is a device which is known to be constantly connected to the network.

It will be appreciated that the device databases throughout the network may not necessarily be completely synchronized with the other device databases in the network. For example, a device could be disconnected from the network for a period of time thereby preventing its database from being updated with any new database objects. Also, a device database may have limited storage capacity, for example on a PDA or mobile device, and therefore be physically unable to store all database objects received. In the above-described embodiment relating to distributed computing, for example, the accuracy of each database is not necessarily critical. Consider the situation where a database of a first device inaccurately reports that a second device is unavailable when it is in fact available. In this case, the first device will not be able choose the second the device for a distributed processing task, and will therefore be forced to choose another available device. On the other hand, if the database of the first device reports that a second device is available when in fact it is not, the first device will realize that the second device is not available as soon as it attempts to communicate the second device. This will therefore lead to the device database being updated to reflect the correct status of the device, which will in turn lead to the updating of other device databases in the network.

The present invention therefore provides a self-sustaining network of devices in which each device (or element) of the network essentially functions independently of each other. This leads to a robust network with no central server and therefore requires no central maintenance or administration.

## Claims

1. A method of distributing data in a network of devices, wherein each device comprises a database and is capable of communicating with at least one other device in the network, the method comprising:
maintaining in the database a list of devices in the network;
selecting a device from the list devices;
selecting a portion of the database;
distributing the selected portion of the database to the selected device;
receiving data from at least one other device in the network; and
updating the database in accordance with the received data.

2. The method of claim 1, wherein the step of receiving data is adapted for receiving unsolicited data.

3. The method of claim 1 or 2, further comprising classifying devices listed in the database into relevant and non-relevant devices.

4. The method of claim 3, wherein the step of maintaining is adapted to maintain a list of both relevant and non-relevant devices in the network.

5. The method of any previous claim, wherein the step of selecting a device is adapted to select a device using pseudo-random selection.

6. The method of any previous claim, wherein the step of selecting a portion of the database is adapted to select the whole contents of the database.

7. The method of any previous claim, wherein the steps of selecting a device, selecting a portion and distributing frequency are performed repeatedly with a non-constant frequency.

8. The method of any previous claim, wherein the step of selecting a device is adapted to selecting a plurality of devices, and further wherein the step of distributing is adapted to distributing to the plurality of selected devices.

9. A device for distributing data in a network of devices, wherein each device comprises a database and is capable of communicating with at least one other device in the network comprising:
means for determining a list of devices in the network;
means for selecting a device from the list;
means for selecting a portion of the database;
means for distributing the selected portion of the database to the selected device;
means for receiving data from at least one other device in the network; and
means for updating the database in accordance with the received data.

10. The device of claim 9 operating according to the method of claims 1 to 8.

11. A network of devices comprising a plurality of devices as claimed in claims 9 or 10.
